# EUROPÄISCHE PATENTSCHRIFT

(11) **EP 3 092 887 B1**
(45) Veröffentlichungstag und Bekanntmachung des Hinweises auf die Patenterteilung: **26.09.2018**
(21) Anmeldenummer: 16001064.1
(22) Anmeldetag: 11.05.2016
(51) Int. Cl.: A01D 78/10

(54) **HEUWERBUNGSMASCHINE**
HAYMAKING MACHINE
MACHINE DE FENAISON

(30) Priorität: 13.05.2015 DE 102015006016
(43) Veröffentlichungstag der Anmeldung: 16.11.2016
(73) Patentinhaber: Maschinenfabrik Bernard Krone GmbH & Co. KG, 48480 Spelle (DE)
(72) Erfinder: Afting, Andreas, 48488 Emsbüren (DE)

(56) Entgegenhaltungen:
- EP-A1- 2 591 662
- DE-C1- 19 716 379
- DE-T2-602005 005 143

## Beschreibung

Die Erfindung betrifft eine Heuwerbungsmaschine, insbesondere zum Schwaden von landwirtschaftlichem Erntegut nach dem Oberbegriff des Anspruchs 1. Derartige Maschinen sind als solche aus dem Stand der Technik bekannt.

Auf dem Gebiet der modernen Landwirtschaft ist es nicht unüblich, zur Heuwerbung, insbesondere beim Schwaden von Erntegut, Maschinen mit zwei oder mehr Rechkreiseln einzusetzten, um eine größere Arbeitsbreite zu erreichen und die benötigte Zeit zur Bergung des Ernteguts zu minimieren. Dabei werden bei Mehrkreiselschwadern Arbeitsbreiten von über zehn Metern erreicht. Um sicher zu stellen, dass die Rechzinken eines Rechkreisels möglichst keinen direkten Bodenkontakt herstellen und trotzdem den Konturen des Erdbodens ausreichend folgen können, werden üblicherweise Fahrgestelle mit Stützrädern unterhalb der Rechkreisel angebracht. Die konstruktionsbedingt recht kleinen Stützräder übertragen somit das gesamte Kreiselgewicht auf den Erdboden. Es ist daher wünschenswert, die Rechkreisel zwecks Erdboden- und Maschinenschonung zu entlasten. Bis dato erfolgt die Entlastung in der Regel durch federnde Systeme, so sind sowohl der Einsatz von Spiralfedern, als auch von hydraulischen Druckspeichern und/oder von Kolbenzylindereinheiten bekannt. Diese Systeme werden in den meisten Fällen zwischen dem Hauptrahmen der Maschine und einem entsprechenden Kreiselausleger montiert.

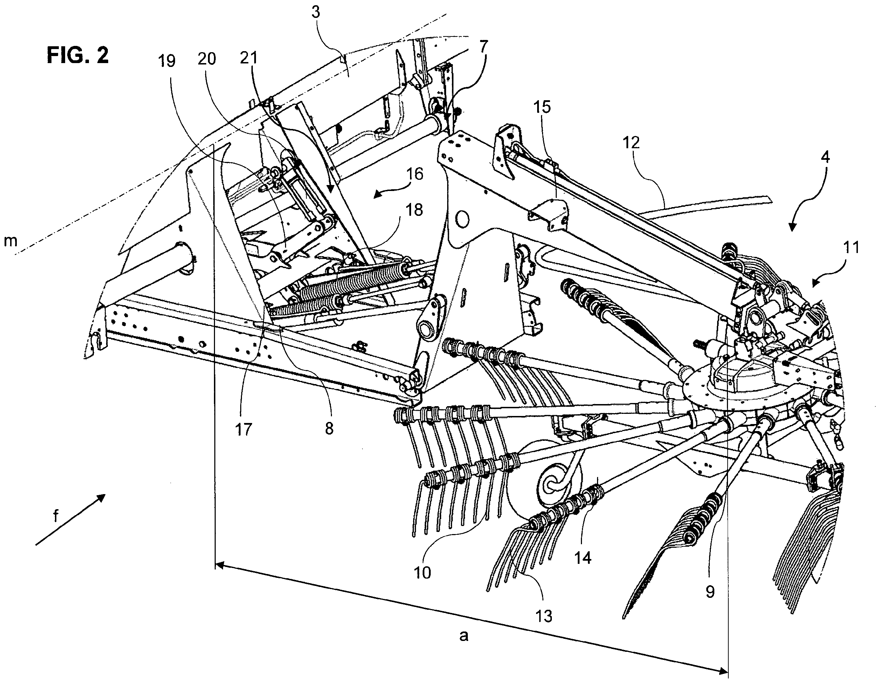

Durch die DE 197 16 379 C1 ist eine derartige Heuwerbungsmaschine zum Schwaden von landwirtschaftlichem Erntegut bekannt geworden. Dazu umfasst die Heuwerbungsmaschine zumindest zwei, um vertikale Achsen umlaufend angetriebene Kreiselrechen, die im Hinblick auf die Fahrt- und Arbeitsrichtung beidseitig von und über quer zur Fahrt- und Arbeitsrichtung sich erstreckende, längenveränderliche Trag- und Antriebsanordnungen an einem Tragrahmen angelenkt sind. Weiterhin erstrecken sich von den Trag- und Antriebsanordnungen zu einer Halterung des Tragrahmens als Zugfedern ausgeführte Kraftspeicher, die durch den Aufbau eines um die Schwenkachse der Trag- und Antriebsanordnungen in der Zeichnungsebene der Fig.2 im Uhrzeigersinn wirkenden Moments eine zumindest teilweise Entlastung der unter den Kreiselrechen angeordneten und in der Arbeits- und Betriebsstellung auf dem Erdboden aufstehenden Stützräder bewirken.

Es ist bei Schwadern mit großer Arbeitsbreite und/oder Mehrkreiselschwadern üblich, die Arbeits-/ Schwadbreite situativ anzupassen. Wird eine solche Einstellung der Arbeits-/ Schwadbreite vorgenommen, ändert sich die Entlastung der an Auslegern angebrachten Rechkreisel gemäß dem veränderten Hebelarm, der sich aus dem Abstand zwischen Maschinenhauptrahmen und entsprechendem Rechkreisel ergibt, so dass folglich der Auflagedruck der Rechkreisel zu gering oder zu hoch sein kann. Diese Einstellungsfehler hätten zur Folge, dass bei zu geringer Entlastung der an Auslegern angebrachten Rechkreisel die Grasnarbe durch die verstärkt wirkende Gewichtskraft eines Rechkreisels, die durch die Räder des dazugehörigen Fahrgestells auf den Erdboden wirkt, beschädigt werden kann. Ebenso steigt in einem solchen Fall die Beanspruchung der Maschinenkomponenten, was erhöhten Verschleiß und/oder vorzeitige Materialermüdung zur Folge haben kann. Das wiederum kann einen frühzeitigen Defekt der Arbeitsmaschine verursachen. Andererseits kann bei zu hoher Entlastung eines Tragarms ein unebener Bereich des Erdbodens dazu führen, dass ein Rechkreisel, bzw. die Räder des dazugehörigen Fahrgestells, nicht ausreichend Kontakt zum Erdboden halten können, sodass das Erntegut von den Zinken der Rechen nicht gleichmäßig aufgenommen und dem Schwad zugeführt wird. Gemäß dem aktuellen Stand der Technik muss eine manuelle Anpassung der entlastenden Elemente erfolgen, um die zuvor genannten Folgen zu vermeiden. Der Bediener ist demnach gezwungen, manuell Anpassungen vorzunehmen, wozu er gegebenenfalls die Kabine der Zugmaschine verlassen und möglicherweise vorhandene Entlastungsvorrichtungen für jeden Rechkreisel einzeln verstellen muss. Der benötigte Zeitaufwand und der zusätzliche Aufwand wären schon Grund genug, eine Verbesserung an zu streben. Bedenkt man darüber hinaus, dass ein Bediener zur Zeiteinsparung die Maschine während des manuellen Verstellvorgangs laufen lassen könnte, lässt sich auch eine erhöhte Unfallgefahr nicht ausschließen.

Aufgabe der Erfindung ist es daher, eine Heuwerbungsmaschine derart weiter zu bilden, dass die Probleme, die sich aus dem Stand der Technik ergeben, beseitigt werden. Zeitaufwändige und möglicherweise gefährliche manuelle Nachjustierungen entfallen, Verschleiß und Materialermüdung werden verringert und gleichzeitig wird eine problemlose und sauber ablaufende, bestimmungsgemäße Funktion gewährleistet.

Erfindungsgemäß wird diese Aufgabe durch die kennzeichnenden Merkmale des Anspruchs 1 gelöst. Vorteilhafte Weiterbildungen der Erfindung sind Gegenstand der weiteren Ansprüche und des Ausführungsbeispiels.

Nach der Erfindung wird eine Heuwerbungsmaschine, insbesondere zum Schwaden von landwirtschaftlichem Erntegut mit wenigstens zwei, um etwa vertikale Achsen umlaufend angetriebenen, an Auslegern angebrachten Rechkreiseln vorgeschlagen, die mit Stützrädern aufweisenden Fahrwerken ausgestattet sind, um sich durch diese vom Erdboden abzustützen und deren Abstand zu einer gedachten, längs zur Fahrtrichtung verlaufenden Mittelachse der Heuwerbungsmaschine durch wenigstens einen Aktor individuell verstellbar sind, wobei die Rechkreisel wenigstens zum Teil mit einer Entlastungseinrichtung versehen sind, so dass die Gewichtskraft der Rechkreisel, die über die Stützräder auf den Erdboden wirkt, verringert wird, wobei bei einer Veränderung des Abstands eines Rechkreisels zur Mittelachse die Wirkung der Entlastungsvorrichtung durch eine Stellvorrichtung in Abhängigkeit vom Abstand des entsprechenden Rechkreisels automatisch derart angepasst wird, dass die Gewichtskraft, die die an Fahrwerken angebrachten Stützräder auf den Erdboden übertragen, etwa einen vorbestimmten Wert annimmt und der eingestellte Abstand eines Rechkreisels zur Mittelachse von wenigstens einem Sensor erfasst und an eine zur Heuwerbungsmaschine gehörenden Steuereinheit gesendet wird und die Steuereinheit die Entlastung eines Rechkreisels durch Ansteuerung wenigstens eines Aktors einer Stellvorrichtung automatisch anpasst.

Vorteilhafte Weiterbildungen der Erfindung sind Gegenstand der weiteren Ansprüche und des Ausführungsbeispiels.

Die in den Ansprüchen beschriebene Heuwerbungsmaschine bietet also den Vorteil, dass keine zusätzlichen Einstellungen zur Entlastung eines Rechkreisels an der Maschine vorgenommen werden müssen. Dieser Vorteil macht sich besonders bei Änderungen der Arbeits-/ Schwadbreite während des laufenden Betriebs bemerkbar.

In einer bevorzugten Ausführung wird eine Heuwerbungsmaschine vorgeschlagen, mit wenigstens zwei, an je einem Ausleger angebrachten Rechkreiseln, die mit dazugehörigem, Stützräder aufweisenden Fahrwerk über dem Erdboden in einer gewünschten Arbeitshöhe gehalten werden und optional in Ihrer Arbeitshöhe verstellt werden können. Mittels einer ersten fluidbetriebenen Kolbenzylindereinheit lässt sich ein dazugehöriger Ausleger derart verstellen, dass der Abstand des entsprechenden Rechkreisels zu einer gedachten Mittelachse der Heuwerbungsmaschine verändert wird. Hierbei sind Ausleger vorstellbar, die die Rechkreisel über wenigstens eine vertikal, horizontal oder diagonal angeordnete Gelenkstelle von einer Transportstellung in eine Arbeitsstellung verfahren lassen. Die Arbeits- /Schwadbreite dieser Maschine kann durch Gelenkstellen des Auslegers verändert werden, indem durch einen Stellmotor oder eine Kolbenzylindereinheit der Winkel, den diese gelenkig miteinander verbundenen Elemente bilden, zur Erhöhung der Arbeits-/Schwadbreite erhöht und zur Verringerung der Arbeits-/Schwadbreite verkleinert wird. Stattdessen, oder zusätzlich, wäre es möglich, dass die Rechkreisel an teleskopisch ausfahrbaren Elementen des Auslegers angebracht werden, welche ebenfalls mit Stellmotoren, Kolbenzylindereinheiten oder Rotationsantrieben, wie Schneckenantrieben ein-/ausgefahren werden können. Darüber hinaus wird zwischen einem, einen Rechkreisel tragenden Ausleger und dem Maschinenhauptrahmen wenigstens eine, mit zumindest einer Spiralfeder verbundene, zweite fluidbetriebene Kolbenzylindereinheit verbaut. Die zumindest eine Spiralfeder sorgt für die Entlastungswirkung am Rechkreisel und wird in ihrer Vorspannung von der mit ihr verbundenen Kolbenzylindereinheit verstellt.

Anstelle der Kombination von Kolbenzylindereinheit und Spiralfeder sind auch Ausführungen denkbar, bei denen eine Entlastung der Rechkreisel von wenigstens einer druckbeaufschlagten Kolbenzylindereinheit ohne mechanisches Federelement, wie einer Spiralfeder, vorgenommen wird. Zur veränderbaren Entlastung sind in diesem Fall Kraftspeichereinrichtungen wie Druckspeicher einsetzbar.

Damit in zuvor genannten Ausführungen ein Bediener keine manuellen Einstellungen bezüglich der Entlastung der Rechkreisel bei einer Veränderung der Arbeits-/Schwadbreite vornehmen muss, wird vorgeschlagen, die Elemente zur Breitenverstellung und der Entlastungsanpassung miteinander zu verbinden.

Im Sinne einer vorteilhaften Ausführung wird eine Verbindung einer ersten doppelwirkenden Kolbenzylindereinheit, die für die Verstellung der Arbeits-/Schwadbreite vorgesehen ist, mit einer zweiten doppelwirkenden Kolbenzylindereinheit, die zur Anpassung der Entlastung eines Rechkreisels bestimmt ist, vorgeschlagen. Dabei werden beide Kolbenzylindereinheiten an ihrer kolbenstangenseitigen Anschlussstelle durch Fluidleitungen miteinander verbunden. Wird zur Erhöhung der Arbeits-/Schwadbreite jetzt eine erste Kolbenzylindereinheit an ihrer Kolbenseite mit Druck beaufschlagt, wird das in der Kolbenstagenseite befindliche Fluid verdrängt und über die Fluidleitung in die, mit der ersten Kolbenzylindereinheit verbundenen, Kolbenstangenseite einer zweiten Kolbenzylindereinheit geleitet. Der Druck auf die Kolbenstangenseite sorgt dafür, dass die Kolbenzylindereinheit einfährt und die Entlastung des, an einem Ausleger montierten, Rechkreisels anpasst. Die Anpassung geschiet also nach dem Prinzip einer Master-Slave Schaltung. Das hat zur Folge, dass die beiden miteinander verbundenen Kolbenzylindereinheiten sowohl von Ihren Volumina, als auch von Ihren Hubwegen aufeinander angestimmt sein müssen. Dadurch wird eine annähernd gleichmäßige Entlastung bei jeder Distanz eines Rechkreisels zu einer gedachten Maschinenmittelachse erreicht. Um die Arbeits-/Schwadbreite wieder zu verringern, wird jetzt die zweite Kolbenzylindereinheit angesteuert und kolbenseitig mit Druck beaufschlagt, wodurch das verdrängte Fluid auf der Kolbenstangenseite für eine Rückhubbewegung der ersten Kolbenzylindereinheit sorgt und somit den Rechenkreisel in eine weniger beabstandete Position zu dem Maschinenhauptrahmen zieht.

Darüber hinaus sind Ausführungen denkbar, deren Entlastungsmechanismen für Rechkreisel keine Kolbenzylindereinheiten nutzen, sondern mechanische Kopplungen. Eine solche Ausführung wäre ein federgestützter Seilzugmechanismus. Hierbei ließe sich ein Seil an einer Spiralfeder nahe des Hauptrahmens einer Heuwerbungsmaschine anbringen. Das gegenüberliegende Endes dieses Seils kann mittels Umlenkrollen an einem Ausleger nahe eines Rechkreisels befestigt werden. Wird der Rechkreisel durch einen Aktor in eine Position verfahren, die zur Erhöhung der Arbeits-/Schwadbreite führt, würde entsprechendes Seil die Vorspannung der Spiralfeder in Hauptrahmennähe gemäß des Seilzugaufbaus der veränderten Breite anpassen.

Ähnliches Prinzip lässt sich auch auf einen auf Gestänge aufbauenden Mechanismus übertragen. Indem ein Rechkreisel an einem Ausleger, durch einen Aktor in seiner Breite verstellt wird, kann eine an ein Gelenk des Auslegers gekoppelte Stange beispielsweise einen Exzenter oder einen Nocken bewegen, welcher seinerseits mit einer Stange eine Verbindung zu ein am Hauptrahmen befindliches Federelement aufweist. Wird der breitenverstellende Aktor betätigt, kann ein derartiger Mechanismus die Vorspannung einer Spiralfeder in gewünschter Weise angleichen.

Eine Ausführung mit Seilzuganpassung kann besonders interessant sein, wenn zur Verstellung der Arbeits-/Schwadbreite Rotationsantriebe genutzt werden, um einen Rechenkreisel in seiner Beabstandung vom Hauptrahmen einer Heuwerbungsmaschine zu verändern. Geht man beispielsweise von einem Schneckenantrieb aus, kann der Ausleger mit einer Zahnstange versehen werden, um eine Breitenanpassung vorzunehmen. Der Schneckenantrieb kann dann, möglicherweise mit einem Zwischengetriebe, eine Seilwinde betreiben, welche ihrerseits ein Federelement gemäß der gewünschten Abeitsbreite und Entlastung in ihrer Vorspannung anpasst. Anstelle einer Schneckenwelle und Zahnstange sind auch der Gebrauch von Zahnrad und Gewindestange denkbar.

Über diese Ausführungen hinaus kann eine Anpassung der Entlastung auch elektronisch geregelt erfolgen. So ist es möglich, mittels wenigstens eines Sensors den Abstand eines Rechkreisels zur Mittelachse und/oder den Verfahrweg/ Verstellwinkel einer Verstelleinheit, die zur Veränderung der Arbeits-/Schwadbreite vorgesehen ist, zu erfassen und an eine Steuereinheit weiterzuleiten. Daraufhin kann die Steuereinheit zum Beispiel anhand einer hinterlegten Wertetabelle einen Aktor ansteuern, welcher seinerseits den Grad der Entlastung des Rechkreisels wie gewünscht anpasst. Darüber hinaus sind Weiterbildungen dieser Steuerung denkbar. So können Parameter wie die Bodenbeschaffenheit, Art und/oder Qualtiät des Ernteguts und Arbeits-/Fahrgeschwindigkeit die Steuerung sinnvoll ergänzen. Ein solcher Aktor kann als Rotations- oder Linearantrieb ausgeführt sein, wobei der Einsatz von Linearantrieben wie Kolbenzylindereinheiten oder elektrischen Stellmotoren im Sinne der Erfindung bevorzugt wird. Im Falle eines eingesetzten Rotationsantriebes kann bei eingehendem Signal der Verstellvorrichtung die Steuereinheit diesen Aktor ansteuern. Dieser kann ein Gestänge verlagern, beziehungsweise einen Seilzug auf-/oder abrollen und dadurch einen Kraftspeicher, wie eine Spiralfeder, in ihrer Vorspannkraft beeinflussen, ähnlich einem vorhergegangenem Ausführungsbeispiel.

### Bezugszeichenliste:

1. Heuwerbungsmaschine
2. Anhängevorrichtung
3. Maschinenhauptrahmen
4. Rechkreisel
5. Fahrwerk
6. Räder
7. Ausleger
8. Aktor
9. Fahrgestell
10. Stützrad
11. kardanische Aufhängung
12. Schutzbügel
13. Kreiselzinken
14. Kreiselarme
15. Aktor
16. Entlastungsvorrichtung
17. Spiralfeder
18. Spiralfeder
19. Winkelhebel
20. Aktor
21. Stellvorrichtung
m - Mittelachse
f - Fahrtrichtung
a - Abstand (Rechkreisel 4 zur Mittelachse m)

Eine detaillierte Beschreibung eines Gegenstandes der Erfindung erfolgt nun anhand eines Ausführungsbeispiels. In der Zeichnung wird folgendes dargestellt:
Fig. 1: Draufsicht einer bevorzugten Ausführung einer Heuwerbungsmaschine 1 mit sich automatisch anpassender Entlastungsvorrichtung 16 bei verschiedenen Arbeits-/ Schwadbreiten
Fig. 2: Detailansicht der Entlastungsvorrichtung 16 nach Fig. 1 in einer ersten Betriebsstellung
Fig. 3: Detailansicht der Entlastungsvorrichtung 16 nach Fig. 1 in einer zweiten Betriebsstellung

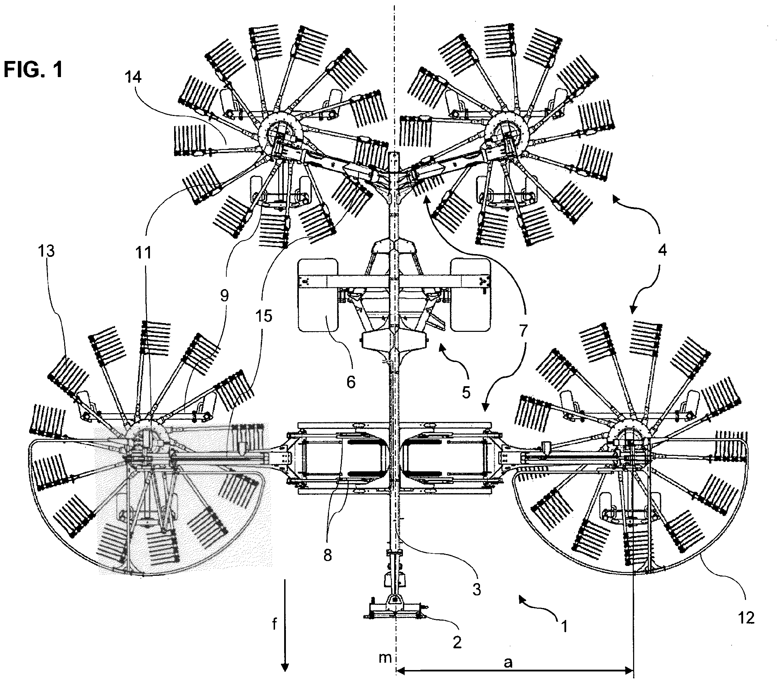

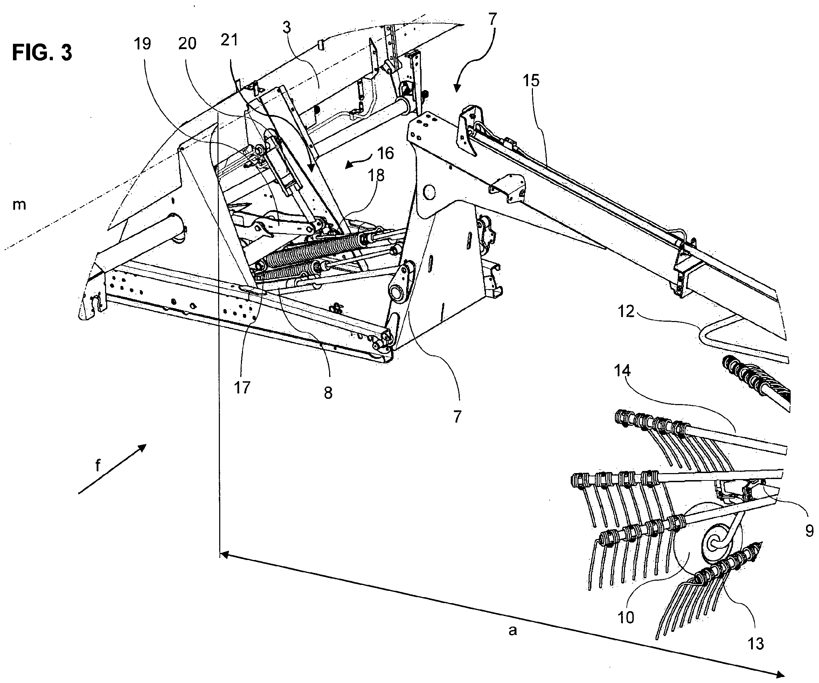

Fig. 1 zeigt eine Ausführung einer Heuwerbungsmaschine 1 gemäß Anspruch 1 in der Draufsicht. In Fahrtrichtung f der Figur lässt sich im vorderen Bereich eine Anhängevorrichtung 2 für einen Dreipunkt-Kraftheber erkennen, um die Heuwerbungsmaschine 1 mit einem Traktor (nicht dargestellt) zu verbinden. An dieser Anhängevorrichtung 2 befindet sich der Maschinenhauptrahmen 3. Durch den Maschinenhauptrahmen 3 wird eine gedachte Mittelachse m gezogen, zu der hinsichtlich des Abstandes a der Rechkreisel 4 Bezug genommen wird. Ebenfalls wird die Mittelachse m auch als Symmetrielinie genutzt, um die Kennzeichnung der Bauteile in **Fig. 1** übersichtlicher zu gestalten. Ausgehend vom Maschinenhauptrahmen 3 stützt sich die Heuwerbungsmaschine 1 über ein Fahrwerk 5 und dazugehörigen Rädern 6 zum Erdboden ab. Die Rechkreisel 4 sind paarweise durch Ausleger 7 am Maschinenhauptrahmen 3 angeordnet und mittels Aktoren 8, in diesem Ausführungsbeispiel als Hydraulikzylinder verwirklicht, zwischen einer Transportstellung und der in Fig. 1 gezeigten Arbeitsstellung verschwenkbar. Darüber hinaus verfügt jeder Rechkreisel 4 über ein Fahrgestell 9 mit dazugehörigen Stützrädern 10, welches den Rechkreisel 4 zum Erdboden abstützt. Damit die Rechkreisel 4 in der Lage sind, Bodenunebenheiten zu folgen, sorgt eine kardanische Aufhängung 11 für die notwendigen Freiheitsgrade. An den in Fahrtrichtung f vorne positionierten Rechkreiseln 4 lässt sich weiterhin erkennen, dass zum Schutz vor Hindernissen auf dem Feld, oder vielmehr am Feldrand, Schutzbügel 12 montiert sind, um die Kreiselzinken 13 und - Arme 14 vor Kollisionsschäden zu schützen. Darüber hinaus sind die Schutzbügel 12 auch für den Personenschutz ausgelegt. Bei genauerem Blick lassen sich Aktoren 15 zur Breitenverstellung erkennen, auch bei diesen Aktoren handelt es sich in diesem Beispiel um Hydraulikzylinder, welche bei den in Fahrtrichtung f vorne angeordneten Rechkreiseln 4 für die Verstellung der Arbeitsbreite zuständig sind und bei den in Fahrtrichtung f hinten positionierten Rechkreiseln 4 zur Verstellung der Schwadbreite genutzt werden. Durch den großen Abstand a der in Fahrtrichtung f vorne angeordneten Rechkreisel 4, selbst bei geringster eingestellter Arbeitsbreite, ist eine Entlastung der, mit den Auslegern 7 durch eine kardanische Aufhängung 11 verbundenen, Rechkreisel 4 mit dazugehörigem Fahrgestell 9 und dessen Stützrädern 10 hilfreich, um den Boden nicht übermäßig zu belasten. Diese Entlastung wird mit einer Entlastungsvorrichtung 16 umgesetzt, welche zwar in **Fig. 1** dargestellt, allerdings in den Ansichten **Fig. 2** und **Fig. 3** deutlicher erkennbar ist.

Der in **Fig. 2** gezeigte Teil der Heuwerbungsmaschine 1 umfasst zunächst einen Rechkreisel 4 mit Fahrgestell 9 und dazugehörigen Stützrädern 10. Dieser ist mit kardanischer Aufhängung 11 am Auslegearm 7 gekoppelt und durch Aktoren 8 in eine Arbeitsstellung geschwenkt worden. Wie an dem Hydraulikzylinder 15 zur Breitenverstellung sichtbar, befindet sich der Rechkreisel 4 an der am wenigsten beabstandeten Arbeitsposition vom Maschinenhauptrahmen 3, gekennzeichnet als Abstand a. Weiterhin wird die Ausführung der Entlastungsvorrichtung 16 deutlicher, als in **Fig. 1** ersichtlich. Zwei Spiralfedern 17 und 18 sind an einem ersten Abschnitt des Auslegers 7 angebracht, dabei ist die Spiralfeder 18 mit einem Winkelhebel 19 verbunden. Das andere Ende dieses Winkelhebels 19 ist mit einem Aktor 20 verbunden, welcher seinerseits an dem Maschinenhauptrahmen 3 schwenkbar befestigt ist. Der Winkelhebel 19 und den Aktor 20, in diesem Fall ein Hydraulikzylinder, bilden eine Stellvorrichtung 21. In dieser Ausführung ist die Kolbenstangenseite des Hydraulikzylinders 15 zur Breitenverstellung, mit der Kolbenseite des Aktors 20 zur Entlastungsanpassung, ebenfalls als Hydraulikzylinder ausgeführt, verbunden, sodass bei Beaufschlagung der Kolbenseite des Aktors 15 mit dem entsprechenden Fluid beide Aktoren 15, 20 ausfahren. Diese, in der Technik als Master-Slave-Schaltung bekannte, Verbindung erfordert, dass die Aktoren 15 und 20 sowohl vom Kolbenweg, als auch von ihren Volumina derart aufeinander abgestimmt sind, dass bei Änderung des Abstandes a die Spiralfeder 18 ausreichend stark vorgespannt wird, um eine gewünschte Anpassung der Entlastung des entsprechenden Rechkreisels (4) zu erreichen. Der Grad der Entlastung kann also durch den Einsatz einer Master-Slave-Zylinderschaltung erwirkt werden.

Die Abstimmung der Hydraulikzylinder 15 und 20 wird bei Betrachtung der **Fig.3** deutlicher. In der Darstellung wird veranschaulicht, wie der Aktor 15 den Rechkreisel 4 weiter vom Maschinenhauptrahmen 3 entfernt, sobald der Hydraulikzylinder 15 mit Druck beaufschlagt wird. Zeitgleich fährt der Hydraulikzylinder 20 aus, wodurch der Winkelhebel 19 in Richtung Erdboden nach unten gedrückt wird und durch die angewinkelte Ausführung wird die Spiralfeder 18 Richtung Mittelachse m der Heuwerbungsmaschine 1 gezogen. Die Vorspannung der Spiralfeder 18 wird also durch die Stellvorrichtung 21 erhöht, somit auch die Entlastungswirkung der Entlastungsvorrichtung 16 auf den Rechkreisel 4. Dabei ist besonders die Nutzung des Winkelhebels 19 hervorzuheben. Durch diese geschickte Anwendung eines Hebels 19 kann in dieser Ausführung sowohl Platz gespart werden, als auch die Kennlinie einer Spiralfeder 18 derart berücksichtigt werden, dass der Grad der Entlastungswirkung der Entlastungsvorrichtung 16 relativ exakt den gewünschten Effekt erzielt. Darüber hinaus ist aber auch die konstruktive Lösung durch anpassen des Winkelhebels 19 möglich und mit Vorteilen verbunden. So kann neben der Platzersparnis zusätzlich eine Übersetzungsanpassung der Entlastungsvorrichtung 16 erreicht werden.

## Patentansprüche

1. Heuwerbungsmaschine (1), insbesondere zum Schwaden von landwirtschaftlichem Erntegut mit wenigstens zwei, um etwa vertikale Achsen umlaufend angetriebenen, an Auslegern (7) angebrachten Rechkreiseln (4), die mit Stützrädern (10) aufweisenden Fahrwerken (9) ausgestattet sind, um sich durch diese vom Erdboden abzustützen und deren Abstand (a) zu einer gedachten, längs zur Fahrtrichtung (f) verlaufenden Mittelachse (m) der Heuwerbungsmaschine (1) durch wenigstens einen Aktor (15) individuell verstellbar sind, wobei die Rechkreisel (4) wenigstens zum Teil mit einer Entlastungseinrichtung (16) versehen sind, so dass die Gewichtskraft der Rechkreisel (4), die über die Stützräder (10) auf den Erdboden wirkt, verringert wird, wobei bei einer Veränderung des Abstands (a) eines Rechkreisels (4) zur Mittelachse (m) die Wirkung der Entlastungsvorrichtung (16) durch eine Stellvorrichtung (21) in Abhängigkeit vom Abstand (a) des entsprechenden Rechkreisels (4) automatisch derart angepasst wird, dass die Gewichtskraft, die die an Fahrwerken (9) angebrachten Stützräder (10) auf den Erdboden übertragen, etwa einen vorbestimmten Wert annimmt, **dadurch gekennzeichnet, dass** die Heuwerbungsmaschine wenigstens einen Sensor aufweist der den eingestellten Abstand (a) eines Rechkreisels (4) zur Mittelachse (m) erfasst und an eine zur Heuwerbungsmaschine (1) gehörenden Steuereinheit sendet und die Steuereinheit die Entlastung eines Rechkreisels (4) durch Ansteuerung wenigstens eines Aktors (20) einer Stellvorrichtung (21) automatisch anpasst.

2. Heuwerbungsmaschine (1) nach Anspruch 1, **dadurch gekennzeichnet, dass** die Steuereinheit anhand einer hinterlegten Wertetabelle den Aktor (20) ansteuert, welcher seinerseits den Grad der Entlastung des Rechkreisels (4) anpasst.

3. Heuwerbungsmaschine (1) nach Anspruch 2, **dadurch gekennzeichnet, dass** Parameter wie die Bodenbeschaffenheit, Art und/oder Qualität des Ernteguts und Arbeits-/Fahrgeschwindigkeit die Steuerung sinnvoll ergänzen

4. Heuwerbungsmaschine (1) nach Anspruch 1, **dadurch gekennzeichnet, dass** die Entlastung der Rechkreisel (4) durch wenigstens eine vorgespannte Spiralfeder (17) erfolgt.

5. Heuwerbungsmaschine (1) nach Anspruch 1, **dadurch gekennzeichnet, dass** die Entlastung der Rechkreisel (4) durch wenigstens eine druckbeaufschlagte Kolbenzylindereinheit erfolgt.

## Claims

1. Haymaking machine (1), in particular for swathing agricultural harvested material, comprising at least two rotary rakes (4) that are driven about approximately vertical axes, are attached to extension arms (7) and are equipped with chassis (9) comprising support wheels (10) in order to be supported off the ground thereby and the distance (a) of which rotary rakes from an imaginary central axis (m) of the haymaking machine (1) that extends longitudinally relative to the direction of travel (f) is individually adjustable by means of at least one actuator (15), the rotary rakes (4) being provided at least in portions with a load-alleviation device (16) such that the weight force of the rotary rakes (4), which acts on the ground via the support wheels (10), is reduced, the action of the load-alleviation device (16), when the distance (a) between a rotary rake (4) and the central axis (m) changes, being automatically adapted by means of an adjustment device (21), depending on the distance (a) of the corresponding rotary rake (4), such that the weight force transmitted to the ground by support wheels (10) attached to chassis (9) approximately takes on a predetermined value, **characterised in that** the haymaking machine comprises at least one sensor which detects the distance (a) set between a rotary rake (4) and the central axis (m) and sends same to a control unit associated with the haymaking machine (1) and the control unit automatically adapts the load alleviation of a rotary rake (4) by controlling at least one actuator (20) of an adjustment device (21).

2. Haymaking machine (1) according to claim 1, **characterised in that** the control unit controls the actuator (20) based on a stored value table, which actuator in turn adapts the degree of load alleviation of the rotary rake (4).

3. Haymaking machine (1) according to claim 2, **characterised in that** parameters such as the soil conditions, the type and/or quality of the harvested material and the operating/travel speed assist the control process.

4. Haymaking machine (1) according to claim 1, **characterised in that** the load alleviation of the rotary rakes (4) is carried out by means of at least one preloaded spiral spring (17).

5. Haymaking machine (1) according to claim 1, **characterised in** the load alleviation of the rotary rakes (4) is carried out by means of at least one pressurised piston cylinder unit.

## Revendications

1. Machine de fenaison (1), en particulier destinée à l'andainage de produits de récolte agricoles comportant au moins deux râteaux rotatifs (4) montés sur des flèches (7) et entraînés en rotation autour d'axes essentiellement verticaux, qui sont équipés de trains de roulement (9) comportant des roues d'appui (10) pour leur permettre de s'appuyer sur le sol, et dont les distances (a) à l'axe imaginaire médian (m) s'étendant le long de la direction de déplacement (f) de la machine de fenaison (1) peuvent être réglées individuellement par au moins un actionneur (15), les râteaux rotatifs (4) étant au moins en partie équipés d'un dispositif de décharge (16) de façon à diminuer la force de gravité des râteaux rotatifs (4) agissant sur le sol par l'intermédiaire des roues d'appui (10), en cas de modification de la distance (a) d'un râteau rotatif (4) à l'axe médian (m), l'action du dispositif de décharge (16) étant automatiquement adaptée par un dispositif de réglage (21) en fonction de la distance (a) du râteau rotatif (4) correspondant, de sorte que la force de gravité transférée sur le sol par les roues d'appui (10) montées sur le train de roulement (9) prenne essentiellement une valeur prédéfinie,
**caractérisée en ce que**
la machine de fenaison (1) comporte au moins un capteur qui détecte la distance (a) réglée d'un râteau rotatif (4) à l'axe médian (m) et la transmet à une unité de commande faisant partie de la machine de fenaison (1) et l'unité de commande adapte automatiquement la décharge d'un râteau rotatif (4) en commandant au moins un actionneur (20) d'un dispositif de réglage (21).

2. Machine de fenaison (1) conforme à la revendication 1,
**caractérisée en ce que**
l'unité de commande commande l'actionneur (20) sur le fondement d'une table de valeurs enregistrée qui de son côté adapte le niveau de décharge du râteau rotatif (4).

3. Machine de fenaison (1) conforme à la revendication 2,
**caractérisée en ce que**
des paramètres tels que l'état du sol, le type et/ou la qualité des produits de récolte et la vitesse de travail / de déplacement complètent la commande de manière significative.

4. Machine de fenaison (1) conforme à la revendication 1,
**caractérisée en ce que**
la décharge des râteaux rotatifs (4) est effectuée par l'intermédiaire d'au moins un ressort spiral précontraint (17).

5. Machine de fenaison (1) conforme à la revendication 1,
**caractérisée en ce que**
la décharge des râteaux rotatifs (4) est effectuée par l'intermédiaire d'au moins une unité cylindre piston sous pression.
